# FASCICULE DE BREVET EUROPEEN

(11) **EP 0 782 940 B1**
(45) Date de publication et mention de la délivrance du brevet: **19.03.2003**
(21) Numéro de dépôt: 96120328.8
(22) Date de dépôt: 18.12.1996
(51) Int. Cl.: B60L 11/12, B60L 11/18, B60L 11/02

(54) **Système d'entraînement pour véhicule automobile à propulsion hybride et son procédé de commande**
Antriebssystem für ein Hybrid angetriebenes Kraftfahrzeug und zugehöriges Steuerungsverfahren
Driving system for a hybrid driven vehicle and control method

(30) Priorité: 05.01.1996 FR 9600094
(43) Date de publication de la demande: 09.07.1997
(73) Titulaire: The Swatch Group Management Services AG, 2501 Biel (CH)
(72) Inventeur: Francescutto, Gianni, 2504 Bienne (CH); Theurillat, Patrick, 1400 Yverdon-les-Bains (CH); Apter, Robert, 1400 Yverdon-les-Bains (CH); Jeanneret, René, 3274 Merzligen (CH); Toth, Antoine, 2800 Delémont (CH)
(74) Mandataire: Balsters, Robert

(56) Documents cités:
- EP-A- 0 645 278
- EP-A- 0 678 414
- WO-A-93/07022
- WO-A-94/27837
- DE-A- 4 344 053

## Description

La présente invention concerne un procédé de commande d'un système d'entraînement pour véhicule automobile à propulsion hybride, ledit système comportant :
- un ensemble générateur comportant un moteur thermique pourvu d'un organe de réglage de puissance et des moyens générateurs électriques entraînés par le moteur thermique pour produire un courant d'alimentation électrique continu à puissance réglable,
- un ensemble propulseur alimenté par ledit courant d'alimentation et pourvu d'au moins un moteur électrique entraînant au moins une roue motrice du véhicule, et
- un accélérateur actionné par un conducteur du véhicule pour délivrer un premier signal de consigne.

L'invention concerne également un système d'entraînement pour véhicule automobile à propulsion hybride, notamment pour la mise en oeuvre du procédé susmentionné, ledit système comportant :
- un ensemble générateur comportant un moteur thermique pourvu d'un organe de réglage de puissance et des moyens générateurs électriques entraînés par le moteur thermique pour produire un courant d'alimentation électrique continu à puissance réglable,
- un ensemble propulseur alimenté par ledit courant d'alimentation et pourvu d'au moins un moteur électrique entraînant au moins une roue motrice du véhicule,
- un accélérateur actionné par un conducteur du véhicule pour délivrer un premier signal de consigne, et
- des moyens de réglage agencés pour régler la puissance du moteur électrique en fonction dudit premier signal de consigne.

La publication WO 93/07022 décrit un système d'entraînement de ce genre, du type hybride série, dans lequel l'ensemble générateur comporte un moteur thermique, une génératrice électrique polyphasée sans balais et un convertisseur électronique qui délivre le courant continu d'alimentation sous le contrôle d'un régulateur de tension. L'ensemble propulseur comprend un ou plusieurs groupes de traction comportant chacun un convertisseur électronique de traction et un moteur électrique polyphasé sans balais. Une unité électronique de commande règle globalement le fonctionnement du système en réponse à une pédale d'accélérateur, à des signaux fournis par différents capteurs et en référence à une mémoire contenant une représentation d'un ou plusieurs champs caractéristiques du moteur thermique. Cette unité commande la puissance du moteur thermique par action sur le papillon des gaz, le couple résistant de la génératrice par action sur le convertisseur d'alimentation, et la puissance du moteur électrique par action sur le convertisseur de traction en fonction de la position de l'accélérateur.

Un inconvénient inhérent à ce système réside dans la grande complexité des moyens de réglage, qui doivent utiliser un nombre élevé de capteurs de différentes natures, traiter leurs signaux en combinaison avec plusieurs valeurs de consigne et élaborer différentes grandeurs de réglage qui doivent être coordonnées entre elles. Cette coordination est particulièrement complexe dans les régimes transitoires, qui sont prépondérants dans les véhicules automobiles. Elle est encore plus complexe lorsque l'ensemble générateur comprend une batterie d'accumulateurs destinée à fournir un appoint de courant d'alimentation.

Par ailleurs, les systèmes connus nécessitent généralement l'utilisation de capteurs de courant qui sont peu précis, ce qui introduit des marges d'erreur dans le réglage et exige souvent des réglages supplémentaires pour assurer la stabilité. Il existe donc un besoin d'un procédé de commande plus simple, capable d'opérer avec un nombre réduit de capteurs et évitant autant que possible l'utilisation de capteurs de courant.

Un système relativement simple, décrit dans la publication WO 94/27837, prévoit deux circuits de commande distincts pour l'ensemble générateur et l'ensemble propulseur, utilisant chacun un signal de vitesse du moteur de l'ensemble correspondant et le signal de consigne fourni par l'accélérateur. La coordination des états de fonctionnement des deux ensembles est réalisée par un circuit de réglage de puissance placé entre les deux ensembles. Sur la base d'une comparaison entre un signal de puissance du moteur thermique et le signal de consigne de l'accélérateur, ce circuit enclenche sur le circuit d'alimentation à courant continu soit une résistance parallèle s'il s'agit d'accélérer, soit une résistance série s'il s'agit de ralentir. Ces actions ont pour effet de modifier le couple résistant de la génératrice, tandis que le moteur thermique tourne toujours "à pleins gaz". L'ensemble générateur, qui est ainsi asservi à l'ensemble propulseur, réagit relativement lentement et cela peut affecter les performances du véhicule. Par ailleurs, les résistances électriques induisent une certaine dissipation d'énergie. En outre, la vitesse toujours élevée du moteur thermique a des inconvénients du point de vue du bruit, de la consommation de carburant et de l'agrément de conduite.

La demande de brevet EP 0 645 278 A1 décrit un procédé et un système d'entraînement du genre défini en préambule ci-dessus, pour un véhicule à propulsion hybride série. Dans ce système, tous les réglages de puissance des ensembles raccordés au circuit d'alimentation à courant continu sont effectués par une unité de commande commune recevant les signaux délivrés par différents capteurs du système et par le conducteur du véhicule. L'unité de commande utilise un signal de consigne délivré par le conducteur pour commander le convertisseur DC/AC de l'ensemble propulseur. Elle calcule la puissance du moteur électrique, par exemple sur la base de la tension et du courant détectés par des capteurs respectifs, et utilise cette valeur de puissance comme cible pour commander la puissance de sortie de la génératrice. Ainsi, le réglage de l'ensemble générateur est asservi à la puissance de l'ensemble propulseur. Un tel système présente sensiblement les mêmes inconvénients que le système selon la publication WO 93/07022 mentionnée plus haut.

La présente invention a pour but de fournir un système d'entraînement et un procédé de commande permettant d'utiliser des moyens de réglage relativement simples, fonctionnant avec un petit nombre de capteurs et avec de faible marges d'erreur, et adaptables à différentes configurations du système d'entraînement en utilisant les mêmes types de réglage. En particulier le même principe de réglage devrait être utilisable avec ou sans batterie branchée sur le circuit d'alimentation.

Dans ce but, l'invention concerne un procédé tel que défini dans la revendication 1.

De préférence, on mesure la tension dudit courant d'alimentation et l'on règle la puissance de l'ensemble propulseur sur la base de ladite tension.

Ainsi, le principe de l'invention prévoit que l'accélérateur agit avant tout sur le réglage de l'ensemble générateur, qui est l'ensemble réagissant le moins vite, tandis que l'ensemble propulseur se règle de manière autonome et automatique en fonction d'un unique paramètre de son alimentation électrique. Ce dernier réglage est quasi instantané, de sorte que l'ensemble propulseur fonctionne en esclave de l'ensemble générateur, dont il suit en permanence l'état de fonctionnement. Comme le paramètre mesuré est de préférence la tension d'alimentation, ce réglage peut facilement être précis et stable. En d'autres termes, on détecte une variation de la tension d'alimentation, signalant un déséquilibre entre la puissance du courant d'alimentation et la puissance demandée par l'ensemble propulseur, et l'on règle ce dernier en conséquence.

Sous un autre aspect, l'invention concerne un système d'entraînement tel que défini dans la revendication 3.

D'autres caractéristiques et avantages de l'invention apparaîtront dans la description suivante de diverses formes de réalisation, présentées à titre d'exemple en référence aux dessins annexés, dans lesquels :
- La figure 1 est un schéma simplifié représentant un système d'entraînement selon l'invention dans sa forme générale préférée;
- la figure 2 représente schématiquement une première forme de réalisation particulière de l'invention;
- la figure 3 représente une variante d'un élément de la figure 2;
- la figure 4 représente une deuxième forme de réalisation particulière de l'invention, et
- la figure 5 représente une troisième forme de réalisation particulière de l'invention.

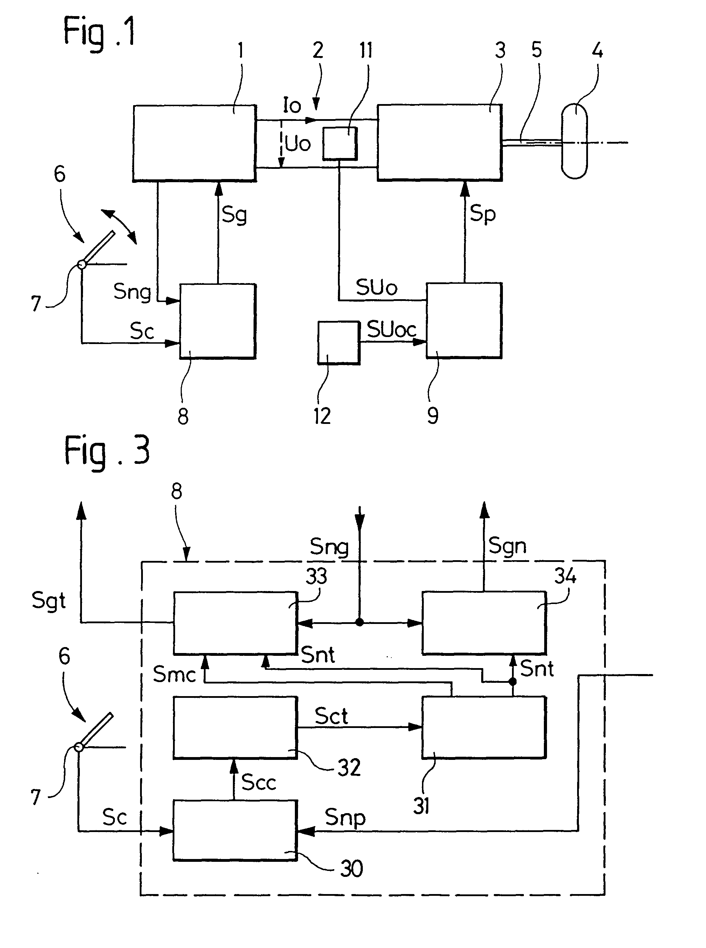

En référence à la figure 1, le système d'entraînement représenté appartient au type bien connu des systèmes de propulsion hybride série pour véhicules automobiles. Il comporte un ensemble générateur 1 pourvu d'un moteur thermique et de moyens générateurs électriques délivrant un courant électrique continu I₀ à tension continue U₀ sur un circuit d'alimentation bifilaire 2. Ce circuit alimente un ensemble propulseur 3 pourvu d'au moins un moteur électrique qui entraîne au moins une roue motrice 4 par un arbre 5 ou par tout autre moyen de transmission mécanique. Bien entendu, le véhicule comporte généralement plusieurs roues motrices, entraînées soit par un moteur électrique commun, soit par des moteurs électriques individuels qui sont considérés ici comme appartenant à l'ensemble propulseur 3. Comme ces solutions sont bien connues de l'homme du métier, on se limitera à mentionner ici un seul moteur électrique et une seule roue afin de simplifier la description.

Le conducteur commande la puissance ou la vitesse du véhicule en agissant sur un accélérateur 6, par exemple une pédale associée à un capteur de course 7 qui délivre un premier signal de consigne Sc représentant de préférence une puissance et agissant sur le système d'entraînement par l'entremise de moyens de réglage. Dans la présente invention, ces moyens sont divisés en un premier dispositif de réglage 8, associé à l'ensemble générateur 1, et un second dispositif de réglage 9 associé à l'ensemble propulseur 3. Comme le montre la figure 1, le premier dispositif de réglage 8 reçoit le signal de consigne Sc et un ou plusieurs signaux représentatifs de l'état de fonctionnement de l'ensemble générateur, notamment un signal Sng représentant la vitesse du moteur thermique et de la génératrice entraînée par celui-ci. En fonction des signaux qu'il reçoit, le dispositif 8 délivre un ou plusieurs signaux de commande Sg à l'ensemble générateur 1 pour régler la puissance du courant d'alimentation I₀ selon la position de l'accélérateur 6, et éventuellement selon la variation de cette position. Le dispositif 8 peut aussi tenir compte d'autres paramètres, comme on le décrira plus loin.

Par contre, le second dispositif de réglage 9 règle l'ensemble propulseur 3 essentiellement en fonction de la puissance mise à sa disposition par le circuit d'alimentation 2. Dans la forme préférée décrite ici, il reçoit un signal de mesure SU₀ délivré par un capteur de tension 11 et représentant la tension continue effective U₀ du courant d'alimentation I₀. Ce signal peut être égal à la tension elle-même ou à une fraction de celle-ci, par exemple. Le dispositif 9 reçoit par ailleurs un second signal de consigne SU_{0c} représentant une valeur de référence ou désirée U_{0c} de la tension U₀. Ce signal est fourni par un élément 12 qui peut être, par exemple, un circuit câblé incorporé au dispositif 9 ou un circuit d'une autre nature, faisant partie des moyens de commande du système d'entraînement. Sur la base d'une comparaison entre les deux signaux SU₀ et SU_{0c}, le second dispositif de réglage 9 élabore au moins un second signal de commande Sp qu'il délivre à l'ensemble propulseur 3 pour régler sa puissance de façon à ramener constamment la tension d'alimentation U₀ à la valeur prescrite par le second signal de consigne SU_{0c}.

Ainsi, le réglage de l'ensemble propulseur 3 par le second dispositif de réglage 9 s'effectue de manière très rapide, quasi instantanée, tandis que le réglage de l'ensemble générateur 1 par le premier dispositif de réglage 8 s'opère de manière plus lente à cause de l'inertie de cet ensemble, notamment l'inertie des masses tournantes du moteur thermique et de la génératrice. L'ensemble propulseur 3 n'est pas commandé directement par le premier signal de consigne Sc provenant de l'accélérateur 6, mais seulement à travers la réaction de l'ensemble générateur 1, se traduisant par une variation de la tension continue d'alimentation U₀. Il fonctionne ainsi en esclave de l'ensemble générateur 1.

En d'autres termes, le système fonctionne selon le principe d'une chaîne : on commande la production d'une certaine énergie à l'aide d'un moteur thermique, que l'on transforme en une énergie électrique continue délivrée sur le circuit d'alimentation 2 et que l'on consomme enfin dans l'ensemble propulseur 3 pour la transformer en énergie mécanique transmise à chaque roue motrice 4.

Travailler de cette manière assure la stabilité du système, puisque chaque élément s'adapte à celui qui est située en amont dans la chaîne et qu'il n'y a pas de réaction dans le système entre la sortie et l'entrée du système. La seule condition requise pour assurer la stabilité du système et un fonctionnement optimum dans tous les cas est que, plus on avance dans la chaîne, plus le temps de réaction des éléments du système doit être rapide. C'est le cas dans le système décrit ci-dessus, où ces conditions peuvent être facilement réalisées, puisque l'élément le plus lent du système est le moteur thermique. Quant aux autres éléments, ils ont des temps de réaction qui sont variables par voie électronique à l'aide de leurs dispositifs de réglage respectifs.

De plus, un tel système est réalisable avec un faible nombre de capteurs et, le cas échéant, sans utilisation de capteurs de courant, si bien qu'il évite les inconvénients mentionnés plus haut.

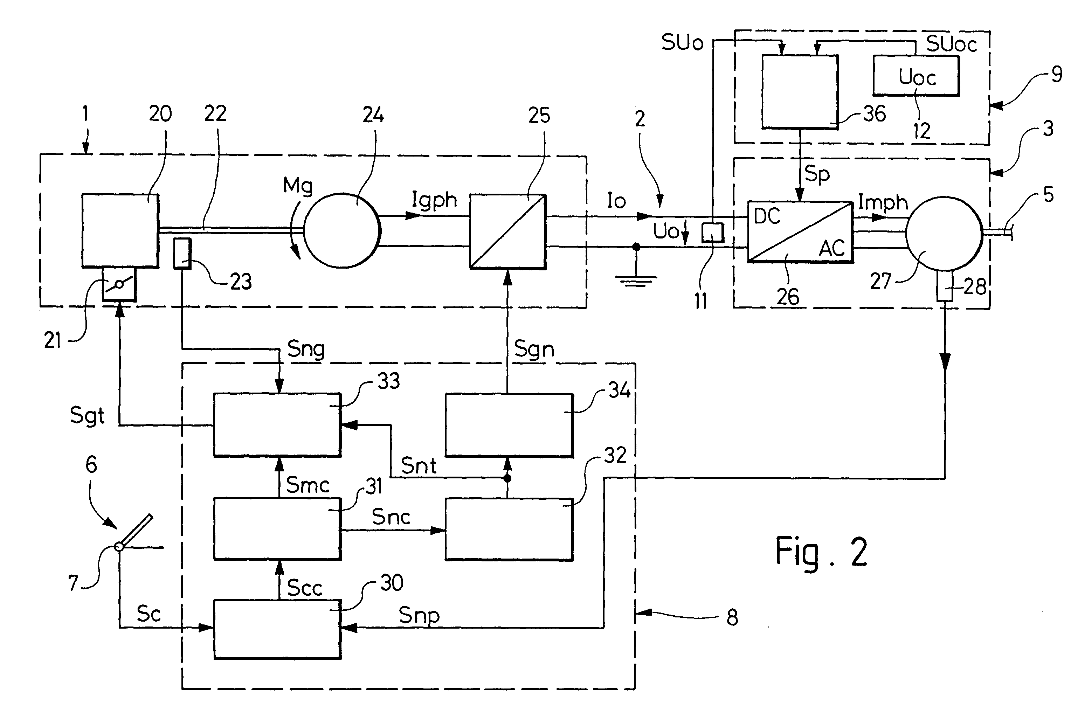

La figure 2 montre plus en détail une forme de réalisation préférée d'un système d'entraînement selon la figure 1.

L'ensemble générateur 1 comporte un moteur thermique réglable 20 d'un type quelconque, par exemple, un moteur Otto pourvu d'un organe de réglage de puissance 21 tel qu'un papillon des gaz ou un dispositif d'injection. Le moteur 20 pourrait aussi être du type Diesel, à turbine à gaz ou autre. L'arbre de sortie 22 du moteur est associé à un capteur de vitesse 23 délivrant le signal Sng et entraîne une génératrice électrique 24, de préférence du type asynchrone ou sans balais, qui délivre un courant alternatif Igₚₕ à un convertisseur électronique d'alimentation 25. Celui-ci convertit le courant alternatif (AC) en un courant d'alimentation continu (DC) de tension U₀ sur le circuit d'alimentation 2. Dans l'ensemble propulseur 3, ce courant alimente un convertisseur électronique de traction 26 qui fonctionne en onduleur pour délivrer un courant de traction alternatif triphasé d'intensité Imₚₕ à un ou plusieurs moteurs électriques 27 dont l'arbre 5 entraîne la roue motrice correspondante. Cette structure est analogue à celle décrite dans la publication WO 93/07022, sauf que dans le cas présent, s'il y a plusieurs moteurs électriques 27, il est préférable de les alimenter tous au moyen du même convertisseur de traction 26 commandé par le second dispositif de réglage 9. Le moteur 27 est pourvu d'un capteur de vitesse 28 délivrant le second signal de vitesse Snp.

Le premier dispositif de réglage 8 comporte de préférence une unité de sécurité 30 qui reçoit le premier signal de consigne Sc et le réduit s'il le faut en fonction de la puissance admissible de l'ensemble générateur 3, pour délivrer un signal de consigne corrigé Scc. D'une manière connue, cette correction a pour but de limiter la puissance électrique d'alimentation lorsque le moteur électrique 27 tourne relativement lentement, afin d'éviter des intensités excessives dans l'ensemble propulseur. A cet effet, l'unité 30 utilise ici le second signal de vitesse Snp, parce que celui-ci est facile à obtenir, mais elle pourrait procéder autrement, notamment sur la base de la fréquence produite par le convertisseur 26 ou directement à l'aide d'une fonction prédéterminée du signal Sc. Une unité de génération de signaux 31 reçoit le signal de consigne corrigé Scc et délivre, par exemple en utilisant une table de valeurs mémorisées ou un dispositif à logique floue, une paire de signaux intermédiaires Smc et Snc déterminant les valeurs stationnaires optimales à atteindre par exemple par le couple et la vitesse de rotation du groupe générateur formé du moteur thermique 20 et de la génératrice 24.

Le signal Snc est traité par une unité de commande de transition 32 qui applique une loi de variation de la puissance en fonction du temps, pour passer dans des conditions optimales de l'état de fonctionnement stationnaire antérieur au nouvel état stationnaire désiré défini par l'accélérateur 6. Lesdites conditions optimales peuvent concerner par exemple la rapidité de montée en vitesse du moteur thermique, sa consommation spécifique, ses émissions polluantes etc., ces paramètres pouvant être fournis par une représentation du champ caractéristique du moteur, par exemple dans une table mémorisée, ou par un dispositif à logique floue. L'unité 32 délivre ainsi un signal Snt qui est une consigne de vitesse transitoire de l'ensemble générateur 1.

Le signal Snt est transmis à une unité de réglage 33 du couple moteur, qui reçoit aussi les signaux Smc et Sng et délivre un premier signal de commande Sgt qui détermine la position instantanée de l'organe de commande 21 du moteur 20. Le signal Snt est également reçu par une unité 34 de réglage du couple résistant qui élabore un second signal de commande Sgn agissant sur le convertisseur d'alimentation 25 de façon à régler le courant alternatif Igₚₕ, lequel détermine le couple résistant Mg exercé par la génératrice 24 sur le moteur 20. La tension de sortie U₀ du convertisseur 25 est approximativement constante, mais elle peut fluctuer vers le bas ou vers le haut si l'ensemble propulseur 3 consomme trop ou trop peu de puissance électrique, en particulier dans une phase transitoire.

Le second dispositif de réglage 9 correspond à ce qui a été décrit en référence à la figure 1. En cas d'écart entre la valeur effective de la tension d'alimentation U₀ et la tension de consigne U_{0c}, une unité de réglage 36 qui compare les signaux SU₀ et SU_{0c} délivre le signal de commande Sp agissant de manière connue sur le convertisseur de traction 26, par exemple pour modifier la tension et/ou la fréquence du courant alternatif délivré au moteur électrique 27. Cette action ramène très rapidement la tension U₀ à la valeur de consigne U_{0c}, indépendamment de la vitesse du moteur 27 et du véhicule lui-même.

On notera en outre que le système fonctionne sans aucun capteur de courant, ce qui évite les problèmes d'imprécision et d'instabilité mentionnés plus haut.

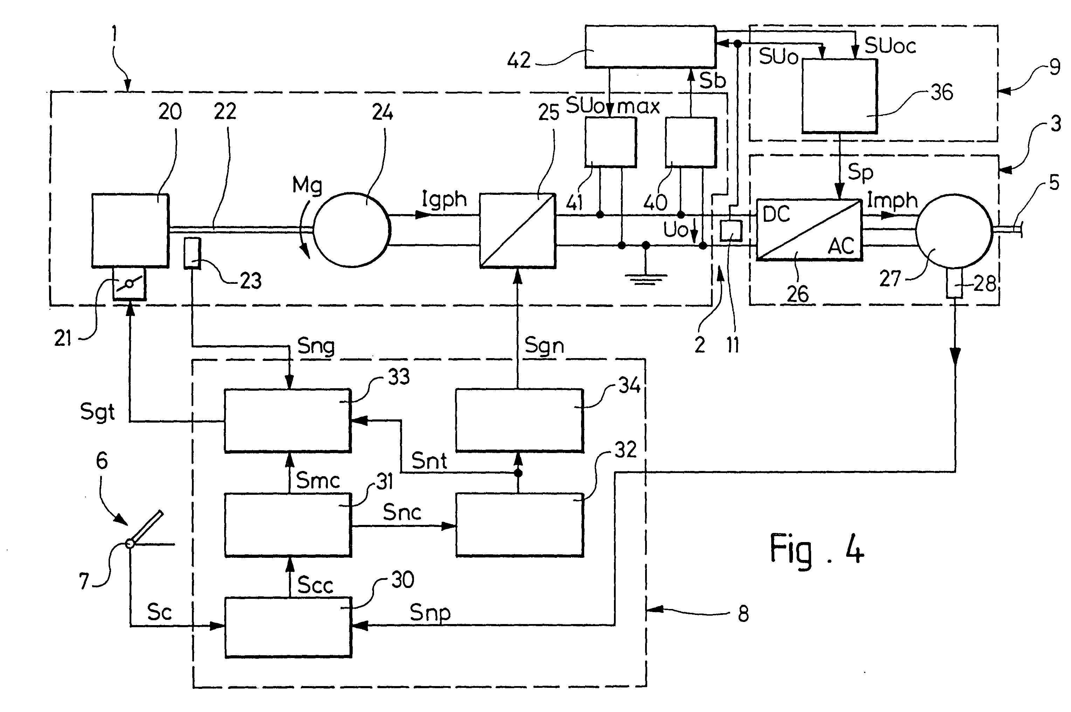

La figure 3 illustre une variante de réalisation du premier dispositif de réglage 8, où les positions des unités 31 et 32 sont permutées par rapport à la figure 2. L'unité 32 reçoit le signal de consigne corrigé Scc et délivre un signal de consigne transitoire Sct à l'unité 31, qui engendre les signaux Smc et Snt représentant des valeurs optimales transitoires du couple et de la vitesse de rotation du moteur 20. Par ailleurs, l'unité 34 reçoit aussi le signal Sng de la vitesse mesurée du groupe générateur. On notera que cette variante est utilisable aussi dans les exemples suivants.

Dans la forme de réalisation du système d'entraînement selon la figure 4, on retrouve pratiquement tous les éléments représentés dans la figure 2, portant les mêmes références. La différence essentielle réside dans l'adjonction d'une batterie 40 d'accumulateurs électriques, susceptible de fournir un appoint de courant sur le circuit d'alimentation 2 et de se recharger en absorbant, selon les cas, une partie du courant produit par le convertisseur d'alimentation 25 ou du courant produit par un freinage électrique à récupération au moyen du moteur électrique 27. Dans le cas où un tel freinage est prévu, on peut aussi brancher au circuit d'alimentation un ballast 41 destiné à utiliser le courant que la batterie 40 ne peut pas absorber. De manière connue, ce ballast peut comporter par exemple des résistances dissipant l'énergie sous forme de chaleur, ou un accumulateur d'énergie cinétique ou thermique. La batterie 40 et le ballast 41 sont sous le contrôle d'une unité électronique de gestion 42 qui détermine l'état de charge de la batterie 40 sur la base d'un ou plusieurs signaux Sb et enclenche le ballast 41 au moyen d'un signal SU₀ₘₐₓ lorsque la tension d'alimentation U₀ dépasse une valeur limite qui dépend de l'état de charge de la batterie 40. C'est également l'unité de gestion 42 qui délivre le signal de consigne de tension SU_{0c} au dispositif de réglage 9 de l'ensemble propulseur 3. Etant donné que la tension à vide aux bornes de la batterie 40 dépend de son état de charge, la tension d'alimentation U₀ varie aussi avec cet état de charge, et l'unité de gestion 42 doit en tenir compte pour élaborer en conséquence le signal de consigne SU_{0c}.

L'homme du métier comprendra que le dispositif de gestion 42 peut recevoir en outre différents signaux de mesure ou de consigne, afin de gérer la batterie 40 d'une manière optimale en fonction des états de fonctionnement du système et des commandes données par le conducteur.

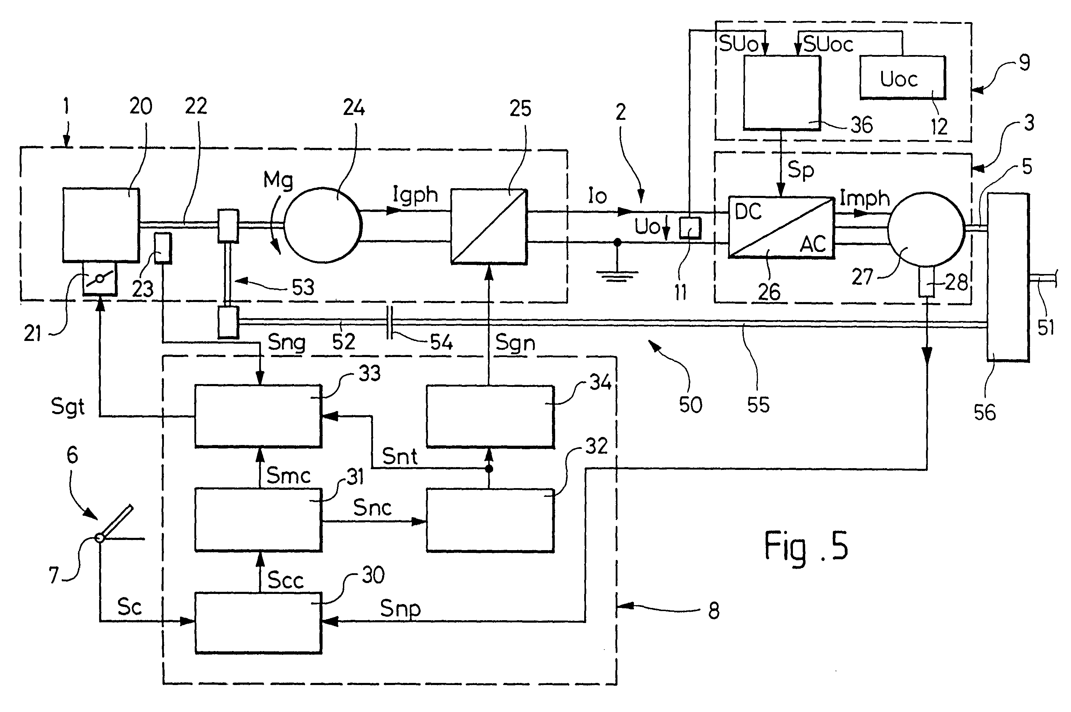

Les applications de la présente invention ne sont pas limitées à un véhicule à propulsion du type hybride série. A titre d'exemple, la figure 5 montre un système d'entraînement de type mixte (série et parallèle) où il existe, en parallèle à l'entraînement par voie électrique au moyen du moteur 27 conformément à la figure 2, une voie de transmission purement mécanique 50 entre le moteur thermique 20 et un arbre de transmission 51 entraînant les roues motrices de manière connue, par exemple à travers un différentiel non représenté. Cette voie 50 comporte un premier arbre secondaire 52 couplé à l'arbre moteur 22 par une transmission quelconque 53, un embrayage 54, un deuxième arbre secondaire 55 et une boîte de transmission 56 qui relie les deux arbres 5 et 55 à l'arbre 51. Il est possible de commander la répartition de la puissance entre les deux voies en intervenant uniquement sur le premier dispositif de réglage 8, notamment sur l'unité 34 réglant le couple résistant de la génératrice 24. Bien entendu, une telle voie mécanique peut aussi être ajoutée au système illustré par la figure 4.

Bien que les exemples illustrés par les figures 2 à 5 comportent des machines électriques à courant alternatif 24 et 27 couplées à des convertisseurs respectifs 25 et 26, le principe de la présente invention est applicable avec d'autres types de machines électriques, en particulier des machines à courant continu, soit dans l'ensemble générateur 1, soit dans l'ensemble propulseur 3. Dans un tel cas, le réglage au moyen du signal de commande Sgn ou Sp peut agir de manière connue sur le courant d'excitation de la machine électrique.

## Revendications

1. Procédé de commande d'un système d'entraînement pour véhicule automobile à propulsion hybride, ledit système comportant :
- un ensemble générateur (1) comportant un moteur thermique pourvu d'un organe de réglage de puissance et des moyens générateurs électriques entraînés par le moteur thermique pour produire un courant d'alimentation électrique continu à puissance réglable,
- un ensemble propulseur (3) alimenté par ledit courant d'alimentation et pourvu d'au moins un moteur électrique entraînant au moins une roue motrice du véhicule, et
- un accélérateur (6) actionné par un conducteur du véhicule pour délivrer un premier signal de consigne (Sc),
et dans lequel on règle la puissance dudit courant d'alimentation par réglage de l'ensemble générateur sur la base du premier signal de consigne (Sc) et de la vitesse du moteur thermique, le procédé étant **caractérisé en ce que**, pour commander la puissance du moteur électrique, l'on règle l'ensemble propulseur en fonction d'un paramètre dudit courant d'alimentation sans considérer le premier signal de consigne (Sc).

2. Procédé de commande selon la revendication 1, **caractérisé en ce que** l'on mesure la tension (U₀) dudit courant d'alimentation et **en ce que** ledit paramètre du courant d'alimentation est ladite tension (U₀).

3. Système d'entraînement pour véhicule automobile à propulsion hybride, notamment pour la mise en oeuvre du procédé selon la revendication 1 ou 2, ledit système comportant :
- un ensemble générateur (1) comportant un moteur thermique (20) pourvu d'un organe de réglage de puissance (21) et des moyens générateurs électriques (24, 25) entraînés par le moteur thermique pour produire un courant d'alimentation électrique continu à puissance réglable,
- un ensemble propulseur (3) alimenté par ledit courant d'alimentation et pourvu d'au moins un moteur électrique (27) entraînant au moins une roue motrice (4) du véhicule,
- un accélérateur (6) actionné par un conducteur du véhicule pour délivrer un premier signal de consigne (Sc), et
- des moyens de réglage agencés pour régler la puissance dudit courant continu d'alimentation, en fonction du premier signal de consigne, et la puissance du moteur électrique,
**caractérisé en ce que** les moyens de réglage comportent un premier dispositif de réglage (8), agissant sur l'ensemble générateur (1) en fonction du premier signal de consigne (Sc), et un second dispositif de réglage (9) agissant sur l'ensemble propulseur (3) pour régler la puissance du moteur électrique en fonction d'un paramètre (U₀) dudit courant d'alimentation sans considérer le premier signal de consigne (Sc).

4. Système d'entraînement selon la revendication 3, **caractérisé en ce que** ledit paramètre est une tension (U₀), le second dispositif de réglage comportant un capteur de tension (11) qui délivre un signal de mesure (SU₀) représentatif de la tension dudit courant d'alimentation.

5. Système d'entraînement selon la revendication 4, **caractérisé en ce que** l'ensemble propulseur (3) comporte un convertisseur électronique de traction (26) qui reçoit ledit courant d'alimentation et alimente le moteur électrique (27), et **en ce que** le second dispositif de réglage (9) comporte une unité de réglage (36) qui reçoit ledit signal de mesure (SU₀) et délivre un signal de commande (Sp) au convertisseur de traction en fonction du signal de mesure.

6. Système d'entraînement selon la revendication 5, **caractérisé en ce que** ladite unité de réglage (36) reçoit en outre un second signal de consigne (SU_{0c}), représentatif d'une tension de référence, et délivre ledit signal de commande (Sp) en fonction d'une comparaison entre le signal de mesure et le second signal de consigne.

7. Système d'entraînement selon la revendication 6, **caractérisé en ce que** le second signal de consigne (SU_{0c}) a une valeur fixe prédéterminée.

8. Système d'entraînement selon la revendication 6, **caractérisé en ce que** l'ensemble générateur (1) comporte un accumulateur électrique (40) et **en ce que** les moyens de réglage comportent des moyens (42) pour déterminer le second signal de consigne (SU_{0c}) en fonction d'un état de charge dudit accumulateur.

9. Système d'entraînement selon la revendication 3, **caractérisé en ce que** les moyens générateurs électriques comportent une génératrice (24) entraînée directement par le moteur thermique (20) et délivrant un courant alternatif à un convertisseur électronique d'alimentation (25) qui délivre ledit courant d'alimentation, et **en ce que** le premier dispositif de réglage (8) reçoit un premier signal de vitesse (Sng), représentatif de la vitesse effective du moteur thermique, et délivre un premier signal de commande (Sgt) à l'organe de réglage (21) du moteur thermique et un second signal de commande (Sgn) au convertisseur d'alimentation (25).

10. Système d'entraînement selon la revendication 9, **caractérisé en ce que** le premier dispositif de réglage (8) comporte :
- une unité de sécurité (30) qui reçoit le premier signal de consigne (Sc) et délivre un signal de consigne corrigé (Scc) en fonction de la puissance admissible de l'ensemble générateur (3),
- une unité de génération de signaux (31) agencée pour recevoir le signal de consigne corrigé (Scc, Sct) et délivrer au moins deux signaux intermédiaires (Smc, Snc, Snt) représentant deux paramètres qui définissent un état optimal du moteur thermique (20), et
- une unité de réglage du couple moteur (33) et une unité de réglage du couple résistant (34) qui délivrent respectivement le premier et le second signal de commande (Sgt, Sgn).

11. Système d'entraînement selon la revendication 10, **caractérisé en ce que** le premier dispositif de réglage (8) comporte des moyens (32) pour définir une variation transitoire desdits premier et second signaux de commande (Sgt, Sgn).

12. Système d'entraînement selon l'une des revendications 3 à 11, **caractérisé en ce qu'**il comporte en outre une voie de transmission mécanique (50) entre le moteur thermique (20) et ladite au moins une roue motrice (4).

## Claims

1. Method for controlling a driving system for a hybrid-powered motor vehicle, said system including :
- a generator set (1) comprising a thermal engine provided with a power adjusting element and electric generator means driven by the thermal engine to produce a direct electric supply current with adjustable power,
- a driving set (3) supplied by said supply current and provided with at least one electric motor driving at least one driving wheel of the vehicle, and
- an accelerator (6) actuated by a driver of the vehicle to deliver a first set-point signal (Sc),
wherein the power of said supply current is adjusted by adjusting the generator set on the basis of the first set-point signal (Sc) and the speed of the thermal engine, the method being **characterised in that**, in order to control the power of the electric motor, the driving set is adjusted on the basis of a parameter of said supply current without considering the first set-point signal (Sc).

2. Method according to claim 1, **characterised in that** the voltage (U₀) of said supply current is measured and **in that** said parameter of the supply current is said voltage (U₀).

3. Driving system for a hybrid-powered motor vehicle, in particular for the implementation of the method according to claim 1 or 2, said system including :
- a generator set (1) comprising a thermal engine (20) provided with a power adjusting element (21) and electric generator means (24, 25) driven by the thermal engine to produce a direct electric supply current with adjustable power,
- a driving set (3) supplied by said supply current and provided with at least one electric motor (27) driving at least one driving wheel (4) of the vehicle,
- an accelerator (6) actuated by a driver of the vehicle to deliver a first set-point signal (Sc), and
- adjusting means arranged for adjusting the power of said direct supply current, as a function of said first set-point signal, and the power of the electric motor,
**characterised in that** the adjusting means include a first adjusting device (8), acting on the generator set (1) as a function of the first set-point signal (Sc), and a second adjusting device (9) acting on the driving set (3) to adjust the power of the electric motor as a function of a parameter (U₀) of said supply current without considering the first set-point signal (Sc).

4. Driving system according to claim 3, **characterised in that** said parameter is a voltage (U₀), the second adjusting device including a voltage sensor (11) which delivers a measurement signal (SU₀) representative of the voltage of said supply current.

5. Driving system according to claim 4, **characterised in that** the driving set (3) includes an electronic traction converter (26) which receives said supply current and supplies the electric motor (27), and **in that** the second adjusting device (9) includes an adjusting unit (36) which receives the measurement signal (SU₀) and delivers a control signal (Sp) to the traction converter as a function of the measurement signal.

6. Driving system according to claim 5, **characterised in that** said adjusting unit (36) further receives a second set-point signal (SU_{0c}), representative of a reference voltage, and delivers said control signal (Sp) as a function of a comparison between the measurement signal and the second set-point signal.

7. Driving system according to claim 6, **characterised in that** the second set-point signal (SU_{0c}) has a predetermined fixed value.

8. Driving system according to claim 6, **characterised in that** the generator set (1) includes an electric accumulator (40) and **in that** the adjusting means include means (42) for determining the second set-point signal (SU_{0c}) as a function of a state of charge of said accumulator.

9. Driving system according to claim 3, **characterised in that** the electric generator means include a generator (24) directly driven by the thermal engine (20) and supplying an alternating current to an electronic supply converter (25) which supplies said supply current, and **in that** the first adjusting device (8) receives a first speed signal (Sng), representative of the effective speed of the thermal engine, and delivers a first control signal (Sgt) to the adjusting element (21) of the thermal engine and a second control signal (Sgn) to the supply converter (25).

10. Driving system according to claim 9, **characterised in that** the first adjusting device (8) includes :
- a safety unit (30) which receives the first set-point signal (Sc) and delivers a corrected set-point signal (Scc) as a function of the admissible power of the generator set (3),
- a signal generating unit (31) arranged for receiving the corrected set-point signal (Scc, Sct) and for delivering at least two intermediate signals (Smc, Snc, Snt) representing two parameters which define an optimum state of the thermal engine (20), and
- an engine torque adjusting unit (33) and a resistant torque adjusting unit (34) which deliver respectively the first and the second control signal (Sgt, Sgn).

11. Driving system according to claim 10, **characterised in that** the first adjusting device (8) includes means (32) for defining a transient variation in said first and second control signals (Sgt, Sgn).

12. Driving system according to any of claims 3 to 11, **characterised in that** it further includes a mechanical transmission line (50) between the thermal engine (20) and said at least one driving wheel (4).

## Patentansprüche

1. Verfahren zum Steuern eines Antriebssystems für Kraftfahrzeuge mit Hybridantrieb, wobei das System umfaßt:
- eine Generatoreinheit (1) mit einem Verbrennungsmotor, der mit einem Leistungsregler versehen ist, und mit elektrischen Generatormitteln, die durch den Verbrennungsmotor angetrieben werden, um einen elektrischen Versorgungsgleichstrom mit regelbarer Leistung zu erzeugen,
- einen Antrieb (3), der durch den Versorgungsstrom versorgt wird und mindestens einen elektrischen Motor aufweist, der mindestens ein Antriebsrad des Fahrzeugs antreibt, und
- eine Beschleunigungsvorrichtung (6), die durch einen Fahrzeugführer bedient wird, um ein erstes Stellsignal (Sc) bereitzustellen,
und bei dem die Leistung der Stromversorgung durch Regeln der Generatoreinheit auf Basis des ersten Stellsignals (Sc) und der Geschwindigkeit des Verbrennungsmotors geregelt wird, wobei das Verfahren **dadurch gekennzeichnet ist, daß** zum Steuern der Leistung des elektrischen Motors der Antrieb in Abhängigkeit eines Parameters der Stromversorgung ohne Berücksichtigung des ersten Stellsignals (Sc) geregelt wird.

2. Steuerverfahren nach Anspruch 1, **dadurch gekennzeichnet, daß** die Spannung (U₀) der Stromversorgung gemessen wird und daß der Parameter der Stromversorgung die Spannung (U₀) ist.

3. Antriebssystem für ein Kraftfahrzeug mit Hybridantrieb, insbesondere zum Ausführen des Verfahrens nach Anspruch 1 oder 2, wobei das System umfaßt:
- eine Generatoreinheit (1) mit einem Verbrennungsmotor, der mit einem Leistungsregler versehen ist, und mit elektrischen Generatormitteln (24, 35), die durch den Verbrennungsmotor angetrieben werden, um einen elektrischen Versorgungsgleichstrom mit regelbarer Leistung zu erzeugen,
- einen Antrieb (3), der durch den Versorgungsstrom versorgt wird und mindestens einen elektrischen Motor (27) aufweist, der mindestens ein Antriebsrad (4) des Fahrzeugs antreibt, und
- eine Beschleunigungsvorrichtung (6), die durch einen Fahrzeugführer bedient wird, um ein erstes Stellsignal (Sc) bereitzustellen, und
- Mittel zum Regeln, die zum Regeln der Leistung des Versorgungsgleichstroms abhängig vom ersten Stellsignal, und der Leistung des elektrischen Motors ausgestaltet sind,
**dadurch gekennzeichnet, daß** die Mittel zum Regeln einen ersten Regler (8) aufweisen, der in Abhängigkeit des ersten Stellsignals (Sc) auf die Generatoreinheit (1) einwirkt, und einen zweiten Regler (9) aufweisen, der auf den Antrieb (3) zum Regeln der Leistung des elektrischen Motors in Abhängigkeit eines Parameters (U₀) der Stromversorgung ohne Berücksichtigung des ersten Stellsignals (Sc) einwirkt.

4. Antriebssystem nach Anspruch 3, **dadurch gekennzeichnet, daß** der Parameter eine Spannung (U₀) ist, wobei der zweite Regler einen Spannungssensor (11) aufweist, der ein Meßsignal (SU₀) liefert, das die Spannung der Stromversorgung repräsentiert.

5. Antriebssystem nach Anspruch 4, **dadurch gekennzeichnet, daß** der Antrieb (3) einen elektronischen Antriebswandler (26) aufweist, der den Versorgungsstrom empfängt und den elektrischen Motor (27) versorgt, und daß der zweite Regler (9) eine Regeleinrichtung (36) umfaßt, die das Meßsignal (SU₀) empfängt und ein Steuersignal (Sp) an den Antriebswandler in Abhängigkeit des Meßsignals liefert.

6. Antriebssystem nach Anspruch 5, **dadurch gekennzeichnet, daß** die Regeleinrichtung (36) femer ein zweites Stellsignal (SU₀c) empfängt, das eine Referenzspannung repräsentiert, und das Steuersignal (Sp) in Abhängigkeit eines Vergleichs zwischen dem Meßsignal und dem zweiten Stellsignal bereitstellt.

7. Antriebssystem nach Anspruch 6, **dadurch gekennzeichnet, daß** das zweite Stellsignal (SU₀c) einen festen, vorbestimmten Wert hat.

8. Antriebssystem nach Anspruch 6, **dadurch gekennzeichnet, daß** die Generatoreinheit (1) einen elektrischen Akkumulator (40) aufweist und daß die Mittel zum Regeln Mittel (42) zum Bestimmen des zweiten Stellsignals (SU_{0c}) in Abhängigkeit eines Ladungszustandes des Akkumulators aufweisen.

9. Antriebssystem nach Anspruch 3, **dadurch gekennzeichnet, daß** die elektrischen Generatormittel einen Generator (24) umfassen, der direkt vom Verbrennungsmotor (20) angetrieben wird und einen Wechselstrom an einen elektronischen Versorgungswandler (25) liefert, der den Versorgungsstrom liefert, und daß der erste Regler (8) ein erstes Geschwindigkeitssignal (Sng) empfängt, das die effektive Geschwindigkeit des Verbrennungsmotors repräsentiert, und ein erstes Steuersignal (Sgt) an den Regler (21) des Verbrennungsmotors und ein zweites Steuersignal (Sgn) an den Versorgungswandler (25) liefert.

10. Antriebssystem nach Anspruch 9, **dadurch gekennzeichnet, daß** der erste Regler (8) umfaßt:
- eine Sicherheitseinrichtung (30), die das erste Stellsignal (Sc) empfängt und ein in Abhängigkeit der zulässigen Leistung des Generators (3) korrigiertes Stellsignal (Scc) liefert,
- einen Signalerzeuger (31), der zum Empfangen des korrigierten Stellsignals (Scc, Sct) und zum Liefern mindestens zweier Zwischensignale (Smc, Snc, Snt) ausgestaltet ist, die zwei Parameter repräsentieren, die einen optimalen Zustand des Verbrennungsmotors (20) festlegen, und
- einen Drehmomentregler (33) und einen Lastmomentregler (34), die das erste bzw. das zweite Steuersignal (Sgt, Sgn) liefern.

11. Antriebssystem nach Anspruch 10, **dadurch gekennzeichnet, daß** der erste Regler Mittel (32) zum Festlegen einer transienten Veränderung des ersten und zweiten Steuersignals (Sgt, Sgn) umfaßt.

12. Antriebssystem nach einem der Ansprüche 3 bis 11, **dadurch gekennzeichnet, daß** es femer einen mechanischen Übertragungskanal (50) zwischen dem Verbrennungsmotor (20) und dem wenigstens einen Antriebsrad (4) umfaßt.
